# FASCICULE DE BREVET EUROPEEN

(11) **EP 0 557 146 B1**
(45) Date de publication et mention de la délivrance du brevet: **17.09.1997**
(21) Numéro de dépôt: 93400221.3
(22) Date de dépôt: 28.01.1993
(51) Int. Cl.: C08K 11/00, C09K 7/02, E21B 33/138, E21B 43/25

(54) **Compositions à base de gels et leur utilisation pour la réduction selective de la perméabilité à l'eau dans les reservoirs chauds et sales**
Gelzusammensetzungen und ihre Verwendung zur selektiven Verminderung der Wasserdurchlässigkeit in warmen und salzhaltigen Reservoirs
Compositions based on gels and their use for the selective reduction of the water permeability in warm and salt reservoirs

(30) Priorité: 03.02.1992 FR 9201265
(43) Date de publication de la demande: 25.08.1993
(73) Titulaire: INSTITUT FRANCAIS DU PETROLE, 92502 Rueil-Malmaison (FR)
(72) Inventeur: Kohler, Norbert, F-78300 Poissy (FR); Rahbari, Ramine, F-92400 Courbevoie (FR); Zaitoun, Alain, F-76000 Rouen (FR)

(56) Documents cités:
- EP-A- 0 145 151
- EP-A- 0 200 062
- EP-A- 0 383 337

## Description

La présente invention a pour objet de nouvelles gels aqueux incluant des compositions réticulantes pour des polymères comportant des groupes acides sulfoniques. Elle concerne également l'utilisation de gels aqueux incluant ces compositions réticulantes pour la réduction sélective de la perméabilité à l'eau dans les réservoirs chauds et salés. Ces compositions réticulantes présentent un intérêt particulièrement grand lorsque la perméabilité de la formation traitée au voisinage des puits est élevée et/ou lorque la température de la formation est élevée, par exemple à une température de formation de 70 à 170°C et/ou une salinité de l'eau en place ou injectée dans la formation au moins égale à celle de l'eau de mer, c'est à dire au moins égale à 30 g/l exprimée en NaCl. Ces nouvelles compositions sont particulièrement applicables à la récupération assistée des hydrocarbures.

La récupération des hydrocarbures liquides ou gazeux de formations souterraines nécessite très fréquemment l'injection de grandes quantités d'eau dans les puits dits d'injection en vue d'améliorer l'efficacité de balayage des formations souterraines et la production desdits hydrocarbures à des puits dits de production. Dans les réservoirs hétérogènes l'injection massive d'eau dans les puits favorise la production prématurée de cette eau aux puits de production par digitation à travers les zones de forte perméabilité laissant des parties importantes de plus faible perméabilité de ce réservoir non balayées et conduisant à une récupération inefficace des hydrocarbures.

Au niveau des puits de production, bien que dans certains cas des productions significatives d'hydrocarbures soient obtenues, la production d'eau qu'elle soit d'origine naturelle ou qu'elle provienne d'un puits d'injection d'eau est parfois si élevée que la production d'hydrocarbures n'est plus économique. Spécifiquement cette arrivée massive d'eau augmente les coûts de production par gas lift par exemple ainsi que les coûts de séparation des fluides, de traitement de l'eau et de son évacuation. Elle empêche par ailleurs l'écoulement des hydrocarbures vers le puits et aggrave les problèmes de formation de dépots et de corrosion.

De nombreuses méthodes destinées à réduire la perméabilité à l'eau des formations très perméables ont été proposées et testées sur champ; elles consistent en général à introduire dans la formation, au niveau de la zone à isoler, soit un ciment, soit une suspension de particules solides ou de paraffines, soit encore des résines. Ces méthodes présentent le désavantage de ne pas être sélectives et de bloquer presque autant la circulation des hydrocarbures que celle de l'eau.

Plus récemment on a proposé l'emploi de gels ioniques ou covalents de différents polymères hydrosolubles. Parmi ces derniers, des polymères vinyliques tels que le polyacrylamide et l'alcool polyvinylique ainsi que leurs copolymères, des polysaccharides naturels ou synthétiques tels que la gomme xanthane et le scléroglucane, les gommes de galactomannane et leurs dérivés de substitution, des dérivés cellulosiques tels que la carboxyméthylcellulose ou l'hydroxyéthylcellulose. Parmi les réticulants ioniques ou covalents permettant d'initier la formation d'un gel, citons les dérivés et complexes de certains cations multivalents tels que ceux du bore, du chrome, de l'aluminium, du fer et de divers métaux de transition ainsi que des composés organiques plurifonctionnels tels que des dialdéhydes, des diamines ou des dialcools.

Il a été constaté que la réticulation sous forme de ;quels compacts, si elle entraine bien la réduction de la perméabilité à l'eau, présente néanmoins l'inconvénient d'affecter également dans une grande mesure la perméabilité aux hydrocarbures.

Pour remédier à ce manque de sélectivité, il a été proposé tout récemment l'emploi de polymères hydrosolubles de poids moléculaire élevé en l'absence de tout agent de réticulation ou de pontage et qui présentent l'avantage par rapport aux solutions précédentes et en particulier, celles qui utilisent des résines ou des gels de polymères, de réduire la circulation de l'eau sans affecter de manière gênante la production d'huile ou de gaz.

Des exemples d'utilisation de ce type de polymères sont décrits dans les brevets des Etats Unis d'Amérique n° 4,095,651 et 4,842,071 de la demanderesse en ce qui concerne des procédés à base de polyacrylamides ou encore le brevet des Etats Unis d'Amérique n° 4,718,491 et la demande de brevet français n° 2 656 374 tous deux également de la demanderesse en ce qui concerne des procédés à base de divers polysaccharides et en particulier de scléroglucane. Si ces procédés remplissent parfaitement leur rôle et en particulier en ce qui concerne la réduction sélective de la perméabilité à l'eau sans affecter celle des hydrocarbures, leur efficacité diminue toutefois lorsque la perméabilité de la formation devient élevée et en particulier si elle est supérieure à 1 Darcy.

Des procédés de réduction sélective de la perméabilité à l'eau dans les zones très perméables de formations souterraines, basés sur l'utilisation de gels faibles, ont été proposés plus récemment encore. C'est ainsi que pour des températures de réservoir inférieures à 80°C il a été suggéré dans EP-A-0 539 289 de la demanderesse de mettre en oeuvre un gel aqueux formé par réticulation au sein même de la formation d'un polyacrylamide non ionique par le glyoxal. Pour des températures de réservoir pouvant aller jusque 130°C WO-A-9 208 038 préconise l'utilisation d'un gel faible constitué par la réticulation en milieu aqueux du scléroglucane par un complexe hydrosoluble d'un cation métallique polyvalent comme le zirconium.

Le brevet français n° 2,224,636 préconise l'utilisation de copolymères d'acrylamide et de 2-acrylamido-2-méthylpropane sulfonate de sodium pour l'augmentation du rapport huile/eau dans les puits producteurs d'huile. Conformément à ce qui été dit ci-dessus pour l'utilisation de polymères hydrosolubles de haut poids moléculaire en l'absence de tout agent de réticulation, l'efficacité de ce type de polymère est limitée lorsque la perméabilité de la formation souterraine est élevée.

Le brevet des Etats Unis d'Amérique n° 4,785,028 préconise par ailleurs l'utilisation d'une composition comprenant un terpolymère d'acrylamide, de N-vinyl-N-méthylacétamide et de 2-acrylamido-2-méthylpropane 3 sulfonate de sodium, un hydroxyde de métal alcalin et un métal de transition sous forme ionique pour la correction de profil en conditions sévères. Bien que l'ion Zr(IV) soit nommément cité, il est connu que cet ion sous forme de sel ne peut être utilisé en eau de mer car il précipite en présence d'ions divalents, tels que Ca(II) ou Mg(II).

Le brevet EP-A-145 151 décrit une composition de ciment comprenant un ciment hydraulique, un copolymère ou un terpolymère comprenant du vinylsulfonate de sodium, de l'acrylamide et du N-N diméthyl acrylamide, réticulé par un chélate de titane et utilisée pour cimenter des forages de puits.

Le brevet EP-A-200 062 décrit une composition gélifiante comprenant un copolymère de 2-acrylamide-2 méthylpropane sulfonate de sodium et d'acrylate de sodium réticulé par du titane en présence d'un couple redox.

Enfin, le brevet EP-A-383 337 décrit une composition gélifiante pour modifier la perméabilité à l'eau comprenant un copolymère d'acrylamide et de 2-acrylamide-2 méthylpropane sulfonate réticulé par un complexe résultant de l'action d'un diacide carboxylique hydroxylé et d'un métal comme le titane ou le zirconium. Le complexe métallique formé dans ces conditions est alors trop stable et la formation d'un gel est fortement ralentie quelle que soit la concentration en agent réticulant.

L'objet de la présente invention remédie aux inconvénients cités et concerne de nouvelles compositions de gels aqueux obtenus au départ d'au moins un copolymère hydrosoluble comportant une fonction acide sulfonique ou de ses sels, susceptible d'être réticulé par au moins un complexe hydrosoluble d'au moins un cation métallique choisi parmi le titane, le zirconium et le hafnium mélangé en quantité suffisante pour former le gel, ainsi que leur utilisation pour la réduction de préférence sélective de la perméabilité à l'eau dans les réservoirs chauds et salés dans le cadre de la récupération améliorée des hydrocarbures.

De manière plus précise, l'invention concerne un procédé de récupération améliorée des hydrocarbures par réduction de préférence sélective de la perméabilité à l'eau dans au moins une partie d'une formation souterraine productrice desdits hydrocarbures, selon lequel on injecte par au moins un puits injecteur ou au moins un puits producteur une solution aqueuse d'au moins un polymère comportant des fonctions acide sulfonique ou de leurs sels et au moins un cation métallique choisi dans le groupe formé par le titane, le zirconium et le hafnium, dans des conditions adéquates, on stoppe l'injection dans la formation pendant un temps suffisant permettant in situ la formation par réticulation d'un gel approprié et l'on injecte de l'eau dans le puits injecteur s'il s'agit d'un puits injecteur ou l'on remet le puits en production s'il s'agit d'un puits producteur, le procédé étant caractérisé en ce que :

le polymère est un copolymère ayant la structure suivante : 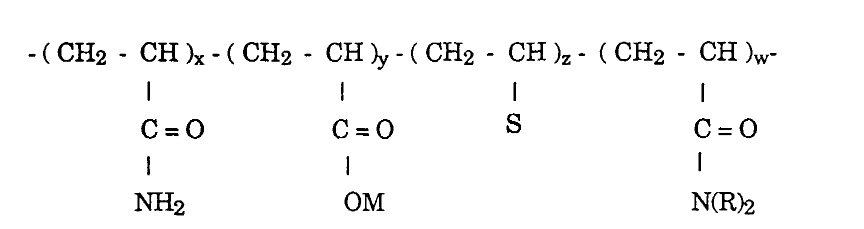
où S est choisi parmi les groupes fonctionnels suivants : SO₃M, CH₂SO₃M, CONH-C (CH₃)₂CH₂ SO₃M, ou phényl SO₃M;
où R est choisi parmi les groupes H, alkyl, cycloalkyl ou encore aralkyl, à l'exclusion où les deux R sont égaux à H;
où M est un ion alcalin ou alcalino-terreux des groupes IA, IB et IIA, IIB ou un ion ammonium, de préférence Na, K, NH₄, Mg ou Ca.

x varie de 5 à 95%;
y varie de 0 à 30%;
z varie de 5 à 95%;
w varie de 0 à 30%;
et le cation métallique est sous une forme de complexe hydrosoluble avec au moins un acide monocarboxylique alphahydroxylé tel que l'acide lactique, au moins une amine aliphatique, au moins un amino-alcool éventuellement alkylé, l'ion ammonium alkylé ou leur mélange et en ce que ledit complexe susceptible de réticuler ledit copolymère est à une concentration, exprimée en poids d'oxyde de métal de 2 à 10.000 parties par million de parties de la solution.

Parmi les copolymères hydrosolubles comportant des fonctions acide sulfonique ou de leurs sels susceptibles d'être utilisés conformément à l'invention, on peut citer ceux décrits et préparés selon les brevets des Etats Unis d'Amérique n° 4.309.523, 3.953.342 et 3.929.741, les brevets Européens n° 376.757, 273.210 et 233.533.

Des copolymères utilisables pour l'invention sont par exemple des copolymères acrylamide - 2-acrylamido-2- méthyl propane sulfonate de sodium, commercialisés en France par la société SNF FLOERGER, St Etienne,
ou encore par exemple des terpolymères d'acrylamide, de N-vinylamide et de vinylsulfonate de sodium commercialisés en République Fédérale d'Allemagne par la société HOECHST AG, Francfort sous la dénomination HOSTAMER (marque déposée).

Le poids moléculaire M_{w} des copolymères est avantageusement élevé, par exemple de 100.000 à 15.000.000 et de préférence de 500.000 à 5.000.000.

La concentration en copolymère dans la solution aqueuse est habituellement comprise entre 5 et 50.000 ppm (parties par million) en poids et de préférence entre 1000 et 10.000 ppm en poids. Pour une salinité donnée de l'eau de dissolution du polymère et pour un poids moléculaire connu de ce dernier, on peut ajuster cette concentration de façon à ce qu'elle soit au minimum égale à la concentration de recouvrement c*.

Conformément à l'invention pour avoir une réduction sélective de la perméabilité à l'eau, la réticulation des copolymères s'obtient avec des concentrations en poids de complexe de titane ou de zirconium ou de hafnium, exprimés en poids d'oxyde de métal par rapport à la solution aqueuse, variant en général entre 2 et 100 ppm, avantageusement de 3 à 95 ppm et de préférence entre 5 et 25 ppm. On pourra même utiliser des concentrations de 100 à 10.000 ppm en poids d'oxyde de métal, avantageusement de 110 à 8000 ppm et préférentiellement de 1000 à 5000 ppm dans certaines applications concernant des réservoirs très perméables ou fissurés où les zones de circulation de l'eau sont nettement séparées des zones de circulation des hydrocarbures.

Avantageusement comme cation métallique polyvalent on utilise le zirconium Zr (IV). Comme agent complexant de ces cations métalliques on préconisera avantageusement l'acide lactique.

Les complexes peuvent comporter, avec ou sans l'acide monocarboxylique alphahydroxylé, ladite amine aliphatique comprenant de 1 à 8 atomes de carbone ou ledit amino alcool avec 2 à 8 atomes de carbone. On peut particulièrement citer la monométhylamine, diméthylamine et triméthylamine, monoéthylamine, diéthylamine et triéthylamine, la diisopropylamine, monoéthanolamine, diéthanolamine et triéthanolamine, méthyldiéthanolamine, éthyldiéthanolamine, diméthyléthanolamine, diéthyléthanolamine, monoisopropanolamine, diisopropanolamine et triisopropanolamine, méthyldiisopropanolamine, éthyldiisopropanolamine, diméthylisopropanolamine, diéthylisopropanolamine, n-butylamine, sec. butylamine, dibutylamine et diisobutylamine. Parmi les complexes avantageusement utilisés, on peut utiliser le lactate de zirconium, le lactate d'ammonium ou de sodium et de zirconium, le lactate triéthanolamine de zirconium, le lactate diisopropylamine de zirconium, le trilactate de sodium et de zirconium, le complexe triéthanolamine de zirconium, le complexe dialkylammonium de zirconium et le complexe trialkylammonium de zirconium.

De la même manière, les complexes correspondants aux composés ci-avant à base de titane ou de hafnium peuvent être utilisés comme agents réticulants. On peut citer, par exemple le lactate de sodium et de titane ou de hafnium, le complexe triéthanolamine de titane ou de hafnium et le lactate d'ammonium et de titane.

Des exemples de composés selon l'invention et leur préparation sont décrits notamment dans les brevets US 4,801,389 et EP-145 151.

Les complexes du titane utilisables pour l'invention sont par exemple commercialisés aux Etats-Unis par la société E.I. du Pont de Nemours sous le nom de TYZOR. En ce qui concerne les complexes de zirconium on peut citer à titre d'exemple les produits commerciaux vendus par SCPI (Société des Produits Chimiques Industriels) sous le nom de ZIRCOMPLEX ou encore par la société ZIRTECH, USA sous le nom de ZIRTECH.

On a obtenu d'excellents résultats en terme de sélectivité avec le lactate de sodium et de zirconium.

La cinétique de réticulation des copolymères par les complexes de titane, zirconium ou hafnium selon l'invention est fonction d'une part du rapport molaire agent complexant / métal polyvalent et d'autre part du pH et de la température.

Par exemple, le rapport molaire agent complexant sur zirconium, titane ou hafnium est préférentiellement compris entre 0,5 et 4 et plus particulièrement entre 2 et 4 avec l'acide lactique. En général plus le rapport molaire acide alphahydroxycarboxylique / métal polyvalent augmente, plus le complexe est stable en particulier en eau de mer. Une trop grande stabilité du complexe en eau de mer doit toutefois être évitée car elle a pour conséquence de trop retarder la réticulation. Par ailleurs dans le cas d'utilisation de complexes insuffisamment stables, il peut être avantageux d'ajouter un mono- ou polyacide organique alphahydroxylé tel que l'acide lactique, l'acide citrique ou l'acide tartrique comme additif retardateur au complexe d'ion multivalent pour stabiliser les solutions préparées à partir de ce dernier et éviter ainsi l'obtention de solutions colloîdales par exemple en eau de mer. On constate en effet que la présence d'acide lactique, d'acide citrique ou d'acide tartrique améliore la stabilité en eau de mer du complexe en particulier pour de faibles concentrations en métal polyvalent. La quantité de mono- ou polyacide organique ne devra toutefois pas dépasser une quantité limite au risque de retarder indéfiniment la réticulation. En milieu poreux, le rapport optimal des concentrations mono- ou polyacide organique/complexe de métal polyvalent est compris entre 0,1 et 3,0. Préférentiellement le rapport mono- ou polyacide organique/métal polyvalent ne dépasse pas 0,8. On peut dans ces conditions moduler le retard de la prise de gel en fonction du type d'acide, de la nature du complexe et de la salinité des eaux et faciliter de ce fait la mise en place du gel.

La cinétique de gélification est par ailleurs fonction du pH de la solution aqueuse et de la température de réaction. En règle générale à pH neutre et à température ambiante quel que soit pratiquement le rapport des constituants du gel, il est nécessaire d'attendre plusieurs jours pour qu'un gel se forme. En milieu alcalin par contre, et pour une valeur du pH supérieure ou égale à 9 la réaction de gélification est très rapide. En milieu de pH proche de 7, la vitesse de gélification est d'autant plus grande que la température est élevée. Le rapport copolymère/ complexe métallique ainsi que le rapport agent complexant/ion métallique polyvalent, pour une température donnée, sont choisis de telle sorte que le temps nécessaire à la formation d'un gel soit d'au moins 6 heures, par exemple de 6 à 72 heures et de préférence de 12 à 48 heures.

Les copolymères porteurs de groupes sulfoniques et éventuellement de groupes acryliques sont anioniques et de ce fait subissent l'action des sels. En règle générale, plus la salinité de la solution aqueuse est élevée, plus la viscosité de la solution de polymère sera faible.

En conditions strictement anaérobies telles que celles prévalant à l'intérieur de la formation à traiter, les compositions selon l'invention sont en général sensiblement stables à des températures pouvant aller jusqu'à 170°C, préférentiellement de 70 à 150°C. La fonction acrylamide subissant toutefois une réaction d'hydrolyse favorisée par l'augmentation de la température même à une valeur de pH proche de la neutralité, il est en règle générale recommandé, particulièrement pour les eaux dures, de sélectionner pour l'obtention d'un gel stable , un polymère dans lequel la teneur en moles en comonomère acrylamide hydrolysable ou déja hydrolysé ne soit pas supérieure par exemple, à 50% plus particulièrement comprise entre 5 et 40% de l'ensemble des comonomères disponibles dans le polymère. Moyennant cette précaution les gels obtenus selon l'invention sont habituellement stables pendant des périodes prolongées, même dans des conditions d'environnement très sévères.

Les compositions selon l'invention, notamment dans le domaine préferré de concentrations préconisé (2-100 ppm en poids d'oxyde de métal polyvalent) peuvent être utilisées pour réduire sélectivement la perméabilité à l'eau des formations souterraines sans affecter sensiblement la perméabilité aux hydrocarbures.

Une première méthode de mise en place de la formulation selon l'invention consiste à mélanger de manière simultanée tous les constituants du gel en tête de puits et à les injecter simultanément dans la formation. La réaction de gélification se fait ensuite au sein de la formation à traiter. Cette méthode s'applique tout particulièrement lorsque l'on désire former un gel faible dans une formation productrice simultanément d'eau et d'hydrocarbures.

Une deuxième méthode de mise en place de la formulation selon l'invention, et correspondant à l'utilisation de gels forts dans une zone de la formation où circule essentiellement de l'eau, consiste à faire des injections successives alternées d'abord de solution de réticulant et ensuite de polymère. On réalise ainsi, par réticulations successives, une multicouche adsorbée de polymère par l'intermédiaire de l'agent de réticulation pouvant aller jusqu'à la formation d'un gel compact avec bouchage de la zone où circulait initialement l'eau.

En général, après mise en place des constituants du gel dans la formation, on ferme le puits pendant un temps plus ou moins long ce qui permet d'une part au polymère de s'adsorber sur la roche réservoir et d'autre part à la réaction de gélification de se faire in situ.

Lorsque l'on remet le puits en production d'huile et/ou de gaz s'il s'agit d'un puits producteur, la circulation de l'huile et ou du gaz à travers cette partie de la formation impregnée par le gel faible n'est pas sérieusement modifiée par rapport à ce qu'elle était avant traitement tandis que la circulation de l'eau est freinée.

De même s'il s'agit d'un puits injecteur d'eau, après mise en place du polymère et du réticulant et le temps d'arrêt d'injection de tout fluide par le puits vers la formation, on procède à nouveau à l'injection d'eau qui se trouve de ce fait détournée des zones de la formation où le gel s'est mis en place.

Les exemples qui suivent sont destinés à illustrer les divers avantages liés à l'utilisation des formulations conformément à l'invention. Ils comportent des tests en éprouvettes permettant l'établissement des diagrammes de phase sol/gel ainsi que la mise en évidence de la stabilité en température des formulations et des tests de mise en place en milieu poreux dans des conditions les plus proches possibles de celles existant dans la formulation pétrolifère.

### Tests en éprouvettes

**Exemple 1 :** Des tests en tube ont tout d'abord été réalisés sur des solutions préparées en dispersant dans une eau contenant 30 g/l de NaCl et 3 g/l de CaCl₂.H₂O un copolymère d'acrylamide et de 2 acrylamido- 2 -méthylpropane sulfonate de sodium sous forme poudre, AN 113 de la société SNF FLOERGER.

On détermine tout d'abord la concentration de recouvrement c∗ qui indique la concentration minimale en polymère pour qu'une gélification puisse avoir lieu et qui est trouvée égale à 1500 ppm à 30°C.

Différentes solutions à des concentrations croissantes de polymère sont préparées et l'on y ajoute des concentrations croissantes (de 5 à 100 ppm en TiO₂) de TYZOR LA, complexe de titane et de lactate d'ammonium, de la Société E.I. du Pont de Nemours ,USA. On établit les diagrammes de phase sol/gel à 30 et à 80°C en notant la quantité minimale de complexe de titane nécessaire pour obtenir une gélification de la solution de polymère visible à l'oeil nu. Il est à noter que par suite de l'addition du complexe de titane le pH de la solution de polymère évolue progressivement de 6,8 à 7,5.

Aucune gélification ou augmentation de viscosité n'est observée pour les différents mélanges préparés à 30°C à un pH voisin de la neutralité. Par contre dès que le pH de ces solutions est porté à 9 un gel visible à l'oeil nu se forme.

Le tableau 1 rassemble les résultats obtenus à 80°C. Au delà d'une concentration minimale en TiO₂ qui diminue lorsque la concentration en polymère augmente, un gel visible à l'oeil nu se forme. Notons que dans le domaine de concentrations étudié le gel obtenu est stable pendant au moins 2 mois et aucun phénomène de synérèse n'est observé.

**Tableau 1**

| Etablissement du diagramme sol/gel pour le système TYZOR LA- copolymère sulfoné (après 24 heures à 80°C) | |
|---|---|
| Copolymère (ppm) | TiO₂ (ppm) |
| 1500 | 50 |
| 2000 | 25 |
| 2500 | 20 |
| 3000 | 20 |

Des observations complémentaires effectuées en tubes scellés à des températures respectives de 100 et 120°C montrent qu'à ces températures une gélification est observée pour des concentrations minimales en complexe de titane oscillant entre 5 et 25 ppm pour des concentrations correspondantes en polymère variant de 5000 à 2000 ppm.

**Exemple 2 :** L'expérience précédente est reprise en utilisant cette fois un terpolymère d'acrylamide,de N-vinylamide et de vinylsulfonate de sodium, HOSTAMER V 3140 de la société HOECHST, dissout dans une eau de mer synthétique contenant 30 g/l de NaCl et 3 g/l de CaCl₂.2 H₂O. Des quantités croissantes (de 5 à 500 ppm en ZrO₂) de ZIRTECH LA, lactate de sodium et de zirconium, fabriqué par la société ZIRTECH, USA sont ajoutées à des solutions contenant 2000 ppm de polymère. L'évolution des différents mélanges est observée à 30 et 80°C, le pH des solutions étant voisin de 7.

Comme dans l'exemple 1 les mélanges maintenus à 30°C ne donnent lieu à aucune augmentation de viscosité visible à l'oeil nu et aucun gel n'est observé après 14 jours à cette température.

Les mélanges maintenus à 80°C et contenant au minimum 20 ppm de ZrO₂ donnent lieu à la formation d'un gel faible au bout d'un temps d'environ 12 heures, gel qui est parfaitement stable pendant des durées prolongées de plus de 14 jours à cette température (concentrations en ZrO₂ comprises entre 20 et 100 ppm). Pour des concentrations supérieures à 200 ppm un gel compact se forme.

**Exemple 3 :** Cet exemple est destiné à montrer la stabilité en température des compositions selon l'invention.

En conditions strictement anaérobies (teneur en O₂ < 5ppb) la stabilité des copolymères sulfonés a été trouvée excellente même en eau de salinité élevée. Le brevet européen n° 273210 signale par exemple des stabilités en eau dure pendant des temps prolongés à 120°C, 150°C, voire même à 200°C.

Une solution dans de l'eau de mer synthétique à pH égal à 7, contenant 2000 ppm de copolymère d'acrylamide et de 2 acrylamido- 2 -méthylpropane sulfonate de sodium et 20 ppm en ZrO₂ de complexe de zirconium, ZIRTECH LA, a été préparée en conditions anaérobies dans plusieurs ampoules scellées et portée à la température de 120°C. A intervalles réguliers on casse une ampoule et l'on mesure la viscosité à 30°C à l'aide d'un viscosimètre LS 30 de la société CONTRAVES et l'on compare les valeurs de viscosité mesurées à celle obtenue 24 heures après préparation du mélange. On constate que la viscosité du gel faible obtenu augmente et se maintient sensiblement au cours du temps, cette augmentation étant de 34% après 1 mois à 120°C, 48% après 3 mois, 47% après 6 mois et encore 29% après 1 an.

Dans les mêmes conditions expérimentales, eau de mer synthétique et 120°C, les gels obtenus au départ de 1500 ppm de terpolymère,HOSTAMER V 3140 et de 10 à 80 ppm en ZrO₂ de ZIRTECH LA sont parfaitement stables au cours du temps , aucune diminution de la viscosité des solutions n'étant observée après plus de 15 jours à cette température.

**Exemple 4 (comparatif) :** Des tests en tube ont été réalisés dans les mêmes conditions expérimentales que l'exemple 1 en utilisant cette fois un complexe mixte de tartrate de zirconium et de sodium.

Une solution à 2500 ppm de polymère sulfoné AN 113 de la société SNF FLOERGER dans l'eau de mer synthétique contenant 30 g/l de NaCl et 3 g/l de CaCl₂.2 H₂0 est mise en présence à 80°C et à pH 7 de concentrations croissantes en complexe (de 50 à 250 ppm). Aucun gel visible à l'oeil nu ne se forme après plus d'un mois à cette température.

Les mêmes observations ont été faites avec un complexe mixte de citrate de zirconium et de sodium.

A la lumière de ces résultats expérimentaux il s'avère par conséquent que les complexes formés au départ de zirconium et d'un di- ou tri-acide hydoxylé empêchent toute réticulation des polymères selon l'invention par suite sans doute de la trop grande stabilité de ces complexes.

**Exemple 5 :** Cet exemple est destiné à montrer l'effet retardateur de différents acides hydroxycarboxyliques sur la gélifications des polymères sulfonés par le ZIRTECH LA, lactate de sodium et de zirconium.

A une solution contenant 2000 ppm de polymère sulfoné AN 113 dans l'eau de mer synthétique on ajoute 50 ppm en ZrO₂ de ZIRTECH LA et l'on porte la température du mélange à 80°C. On constate par mesure de la viscosité de la solution qu'un gel se forme après environ 2 heures.

On prépare ensuite plusieurs tubes contenant le même mélange gélifiable et l'on y ajoute des concentrations croissantes en acide lactique (10 à 40 ppm). On constate d'après les résultats du tableau 2 que l'addition d'acide lactique retarde le temps de formation du gel.

On reprend les mêmes conditions expérimentales en ajoutant cette fois des concentrations de 10 à 50 ppm d'acide citrique comme retardateur. Avec 10 ppm d'acide citrique le temps de formation du gel passe de 2 à 25 heures alors que des concentrations supérieures en acide citrique empêchent totalement la formation du gel.

L'addition d'un acide hydroxycarboxylique au complexe de lactate de zirconimum et de sodium permet par conséquent de retarder considérablement la formation d'un gel selon l'invention.

**Tableau 2**

| Mise en évidence de l'effet retardateur sur la formation d'un gel d'un excès d'acide lactique. | |
|---|---|
| Concentration en acide lactique (ppm) | Temps de prise du gel (heures) |
| 0 | 2 |
| 10 | 6 |
| 20 | 9 |
| 40 | 15 |

### Tests en milieu poreux

Dans les exemples (6 à 8) qui suivent relatifs à la mise en place des formulations selon l'invention dans des milieux poreux constitués de carottes de grès des Vosges ou de sable d'Entraigues de perméabilité élevée (k > 1 D) on a en général comparé sur le même milieu poreux l'effet du polymère seul à celui obtenu avec le polymère en présence d'agent réticulant.

**Exemple 6 :** Dans une carotte de grès des Vosges saturée en eau de mer synthétique à la température de 100°C et dont la perméabilité est trouvée égale à 1,68 D, on injecte à un débit q = 2 cm³/h une solution également dans l'eau de mer contenant 2g/l de copolymère d'acrylamide et de 2 acrylamido 2 méthylpropane sulfonate de sodium, AN 113 de la société SNF FLOERGER, à un pH voisin de 7.

Après mise en place du polymère dans le milieu poreux on déplace à l'aide d'eau de mer le polymère libre qui n'a pas été retenu par adsorption sur la roche. En faisant varier ensuite le débit d'injection d'eau et en mesurant les pertes de charge stabilisées aux bornes de la carotte on obtient les valeurs de réduction de perméabilité Rₖ₁ du tableau 3.

On procède ensuite de la même façon avec une formulation selon l'invention constituée d'un mélange dans l'eau de mer synthétique de 2g/l de copolymère sulfoné et de 13,3 ppm en ZrO₂ de lactate de sodium et de zirconium, ZIRTECH LA. On arrète toute circulation de fluides pendant 24 heures avant d'évacuer l'excès de polymère et de réticulant et de procéder à la mesure de Rₖ₂ (tableau 3). On constate que les valeurs de réduction de perméabilité à l'eau ont fortement augmenté à la suite de la mise en place du gel comparativement à celles consécutives à la mise en place du polymère seul.

Le milieu poreux étant toujours maintenu à 100°C, on procède à intervalles réguliers à la mesure de Rₖ₂ qui est trouvé stable pendant au moins 10 jours.

On injecte finalement dans la carotte un mélange 60/40 dodécane/huile de vaseline et l'on constate que la perméabilité relative à l'huile kᵣₒ est voisine de O,6 pour un état de saturation en eau S_{w} = 0,52, ce qui semble indiquer que la perméabilité à l'huile n'est guère affectée par la présence de gel.

**Tableau 3**

| Evolution de la réduction de perméabilité à l'eau de mer d'un grès des Vosges après traitement au polymère seul (Rₖ₁) et après traitement polymère + ZIRTECH LA (Rₖ₂). | | | |
|---|---|---|---|
| Débit d'injection d'eau q (cm³/h) | γ(sec⁻¹) | Polymère seul | Polymère + ZIRTECH LA |
| | | Rₖ₁ | Rₖ₂ |
| 50 | 25,7 | 2,70 | 15,7 |
| 80 | 41,1 | 2,70 | 14,6 |
| 100 | 51,4 | 2,84 | 12,2 |
| 200 | 102,8 | 3,24 | 12,4 |
| 300 | 154,2 | 3,69 | 12,2 |
| 400 | 205,6 | 4,39 | 11,7 |

**Exemple 7 :** L'expérience précédente est renouvelée avec une autre carotte de Grès des Vosges dont la perméabilité à l'eau de mer est trouvée égale à 1,87 D (S_{w} = 100%). On met cette carotte en eau résiduelle en la saturant à 80°C à l'aide d'un mélange 60/40 dodécane/vaseline (µ = 2,40 cP à 80°C). On peut alors mesurer les valeurs initiales de perméabilité relative à l'huile et à l'eau qui sont respectivement kᵣₒ = 0,592 pour S_{w} = 0,458 et kᵣₒ = 0,33 pour S_{w} = 0,50 ainsi que kᵣₒ = 0,066 pour S_{w} = 0,635).

En saturation résiduelle en huile on injecte à présent à un débit q = 2 cm³/h et à une température de 80°C une solution à 2 g/l de terpolymère d'acrylamide,de N-vinylamide et de vinylsulfonate de sodium, HOSTAMER V3140 de la société HOECHST également dans l'eau de mer synthétique et à un pH voisin de 7.

On déplace ensuite le polymère non adsorbé par de l'eau de mer jusqu'à ce que l'on ne détecte plus de polymère dans les effluents, puis l'on fait varier le débit d'injection d'eau tout en mesurant les pertes de charge aux bornes du milieu poreux et l'on calcule les valeurs correspondantes de réduction de perméabilité Rₖ₁ (tableau 4).

**Tableau 4**

| Evolution de la réduction de perméabilité à l'eau de mer d'un grès des Vosges après traitement au polymère seul (Rₖ₁) et après traitement polymère + ZIRTECH LA (Rₖ₂). | | | |
|---|---|---|---|
| Débit d'injection d'eau q (cm³) | γ(sec⁻¹) | Polymère seul | Polymère + ZIRTECH LA |
| | | Rₖ₁ | Rₖ₂ |
| 20 | 63,6 | 7 | 34 |
| 50 | 159 | 7,25 | 22,6 |
| 100 | 318 | 7,50 | 17,6 |
| 200 | 636 | 8,41 | 16,2 |

On balaie la carotte par de l'huile jusqu'à la nouvelle valeur de saturation en eau S_{w} = 0,46 et l'on obtient la valeur de la perméabilité relative à l'huile après traitement au polymère seul kᵣₒ = 0,27 à comparer avec la valeur initiale kᵣₒ = 0,33 pour le même état de saturation en eau. La perméabilité relative à l'huile n'a que peu varié par suite de la présence de polymère.

La procédure ci-dessus est répétée avec une formulation selon l'invention constituée d'un mélange dans l'eau de mer de 2 g/l de polymère sulfoné, de 130 mg de complexe de zirconium ZIRTECH LA, soit environ 18 ppm en ZrO₂ et de 8 ppm d'acide citrique utilisé comme retardateur de gélification. Après un temps d'arrèt de 48 heures à 80°C pour permettre la formation du gel on procède à l'injection d'eau de mer à différents débits. Les valeurs de réduction de perméabilité à l'eau Rₖ₂ après mise en place du gel sont reportés sur le tableau 4.

Après injection d'huile on trouve une perméabilité relative à l'huile kᵣₒ = 0,236 à S_{w} = 0,46 à comparer avec les valeurs initiales kᵣₒ = 0,33 et après traitement au polymère seul kᵣₒ = 0,27 obtenues au même état de saturation. La perméabilité relative à l'huile n'est donc que faiblement affectée par suite de la mise en place du gel.

La formulation selon l'invention réduit donc sélectivement la perméabilité à l'eau sans affecter outre mesure la perméabilité à l'huile.

### Exemple 8: Mise en place d'un gel fort.

Dans un massif de sable d'Entraigues à 80°C saturé en eau de mer synthétique et dont la perméabilité a été trouvée égale à 5,1 D, on a procédé à l'injection alternée au débit de 20 ml/h de 1 volume poreux d'une solution de ZIRCOMPLEX PN, fabriqué par la Société des Produits Chimiques Industriels (SCPI),France et titrant 600 ppm en ZrO₂ suivi de 1 volume poreux d'une solution de copolymère sulfoné AN 113 de la société SNF FLOERGER (cₚ = 2000 ppm) dans l'eau de mer . On arrête toute circulation pendant 24 heures pour permettre à la réaction de gélification de se faire.

On procède ensuite à l'injection d'eau de mer au même débit de 20 ml/h et on constate que les pertes de charge aux bornes du milieu poreux ont fortement augmenté et que la perméabilité à l'eau de mer est devenue très faible. Par calcul on obtient une réduction de perméabilité à l'eau supérieure à 2.10⁴.

L'injection alternée de réticulant et de polymère réduit considérablement la perméabilité à l'eau par suite de la formation d'un gel fort. Un essai d'injection d'un mélange 60/40 dodécane/huile de vaseline dans ce milieu donne lieu à des pertes de charge très élevées montrant ainsi que la formulation utilisée n'est plus sélective et bloque aussi bien le passage de l'eau que celui de l'huile.

## Revendications

1. Compositions de gels aqueux consistant essentiellement en de l'eau, au moins un copolymère ayant la structure suivante: 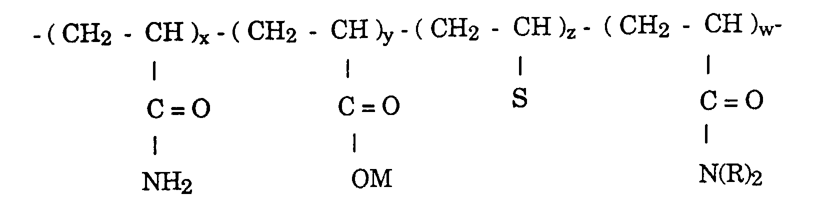
où S est choisi parmi les groupes fonctionnels suivants : SO₃M, CH₂SO₃M, CONH-C (CH₃)₂CH₂ SO₃M, ou phényl SO₃M;
où R est choisi parmi les groupes H, alkyl, cycloalkyl ou encore aralkyl, à l'exclusion où les deux R sont égaux à H;
où M est un ion ammonium ou un ion des groupes I_{A}, I_{B} ou des groupes II_{A} et II_{B}.
x varie de 5 à 95%;
y varie de 0 à 30%;
z varie de 5 à 95%;
w varie de 0 à 30%.
et au moins un complexe hydrosoluble de cation métallique choisi dans le groupe formé par le titane, le zirconium et le hafnium comme réticulant, mélangé en quantité suffisante pour former le gel, lesdites compositions étant caractérisées en ce que ledit complexe résulte de la réaction du cation et d'au moins un agent complexant choisi dans le groupe formé par les acides monocarboxyliques alpha hydroxylés, les amines aliphatiques, les aminoalcools éventuellement alkylés et l'ion ammonium alkylé, et la concentration en complexe de métal polyvalent exprimée en poids d'oxyde de métal est comprise entre 2 et 10000 ppm, de préférence de 2 à 100 ppm.

2. Compositions selon la revendication 1, dans lesquelles l'acide monocarboxylique est l'acide lactique.

3. Compositions selon les revendications 1 et 2, dans lesquelles le complexe hydrosoluble comporte la triéthanolamine ou la diisopropylamine.

4. Compositions selon l'une des revendications 1 à 3 dans lesquelles le complexe hydrosoluble est du lactate de sodium et de zirconium ou du lactate de sodium ou d'ammonium et de titane.

5. Compositions selon l'une des revendications 1 à 4 dans lesquelles la concentration en copolymère est comprise entre 5 et 50000 ppm en poids, de préférence entre 1000 et 10000 ppm.

6. Compositions selon l'une des revendications 1 à 5 dans lesquelles le rapport molaire agent complexant sur cation métallique est compris entre 0,5 et 4.

7. Procédé de récupération améliorée des hydrocarbures par réduction de la perméabilité à l'eau dans au moins une partie d'une formation souterraine productrice desdits hydrocarbures, selon lequel on injecte par au moins un puits injecteur ou au moins un puits producteur une solution aqueuse d'au moins un copolymère comportant des fonctions acide sulfonique ou de leurs sels ayant la structure suivante : 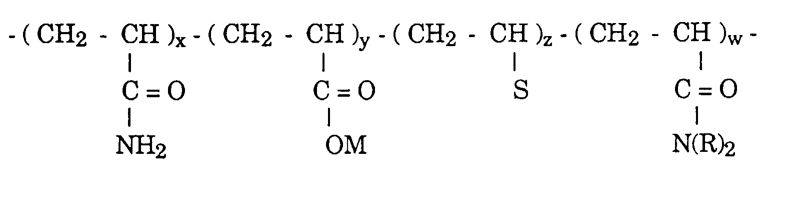
où S est choisi parmi les groupes fonctionnels suivants : SO₃M, CH₂SO₃M, CONH-C (CH₃)₂CH₂ SO₃M ou phényl SO₃M;
où R est choisi parmi les groupes H, alkyl, cycloalkyl ou encore aralkyl, à l'exclusion où les deux R sont égaux à H;
où M est un ion ammonium ou un ion des groupes I_{A}, I_{B} ou des groupes II_{A} et II_{B}.
x varie de 5 à 95%;
y varie de 0 à 30%;
z varie de 5 à 95%;
w varie de 0 à 30%,
et au moins un complexe hydrosoluble de cation métallique choisi dans le groupe formé par le titane, le zirconium et le hafnium comme réticulant, dans des conditions adéquates, on stoppe l'injection dans la formation pendant un temps suffisant permettant in situ la formation par réticulation d'un gel approprié et l'on injecte de l'eau dans le puits injecteur s'il s'agit d'un puits injecteur ou l'on remet le puits en production s'il s'agit d'un puits producteur, le procédé étant caractérisé en ce qu'on injecte dans ledit puits ledit copolymère et au moins ledit complexe hydrosoluble résultant de la réaction du cation et d'au moins un agent complexant choisi dans le groupe formé par les acides monocarboxyliques alpha hydroxylés, les amines aliphatiques, les aminoalcools éventuellement alkylés et l'ion ammonium alkylé, et en ce que ledit complexe susceptible de réticuler ledit copolymère est à une concentration, exprimée en poids d'oxyde de métal de 2 à 10000 parties par million de parties de la solution.

8. Procédé selon la revendication 7 dans lequel l'agent complexant est l'acide lactique, le triéthanolamine, la diisopropylamine.

9. Procédé selon l'une des revendications 7 à 8 dans lequel le pH de la solution au moment de la réticulation est compris entre 6 et 10 et dans lequel le pH, le rapport copolymère sur complexe hydrosoluble et le rapport complexant sur cation métallique sont choisis de telle façon que le temps nécessaire à la formation du gel soit d'au moins 6 heures et de préférence de 12 à 48 heures.

10. Procédé selon l'une des revendications 7 à 9 dans lequel la concentration du complexe est de 2 à 100 ppm, avantageusement de 3 à 95 ppm et de préférence de 5 à 25 ppm de telle sorte que la perméabilité à l'eau est fortement réduite sans que la perméabilité à l'huile ne soit sensiblement affectée.

11. Procédé selon l'une des revendications 7 à 9, dans lequel la concentration du complexe est de 100 à 10000 ppm, avantageusement de 110 à 8000 ppm, lorsque la formation est fissurée ou très perméable.

12. Procédé selon l'une des revendications 7 à 11 caractérisé en ce qu'il est appliqué au cas où la formation est à une température de 70 à 170°C.

13. Procédé selon l'une des revendications 7 à 12, dans lequel on introduit comme retardateur au moins un additif mono- ou polyacide organique alphahydroxylé tel que l'acide lactique, l'acide citrique ou l'acide tartrique.

## Patentansprüche

1. Wäßrige Gelzusammensetzungen, die im wesentlichen bestehen aus Wasser, mindestens einem Copolymer mit der folgenden Struktur: 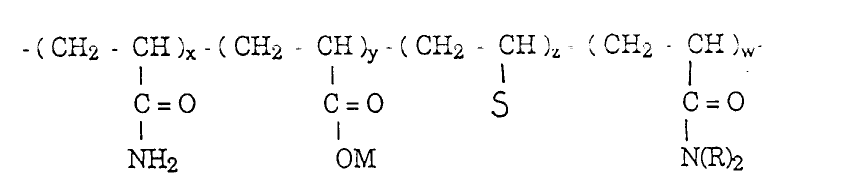 worin:
S ausgewählt wird aus den folgenden funktionellen Gruppen: SO₃M, CH₂SO₃M, CONH-C(CH₃)₂CH₂SO₃M oder Phenyl-SO₃M;
R ausgewählt wird aus den Gruppen H, Alkyl, Cycloalkyl oder auch Aralkyl, ausgenommen der Fall, daß die beiden Reste R für H stehen;
M ein Ammoniumion oder ein lon der Gruppen I_{A}, I_{B} oder der Gruppen II_{A} und II_{B};
x variiert von 5 bis 95 %;
y variiert von 0 bis 30 %;
z variiert von 5 bis 95 %; und
w variiert von 0 bis 30 %;
und mindestens einem wasserlöslichen Komplex eines Metallkations, ausgewählt aus der Gruppe Titan, Zirkonium und Hafnium, als Vernetzungsmittel, der in einer für die Gelbildung ausreichenden Menge beigemischt ist, wobei die genannten Zusammensetzungen dadurch gekennzeichnet sind,
daß der genannte Komplex resultiert aus der Reaktion des Kations mit mindestens einem komplexbildenden Agens, ausgewählt aus der Gruppe der α-Hydroxy-monocarbonsäuren, der aliphatischen Amine, der gegebenenfalls alkylierten Aminoalkohole und des alkylierten Ammoniumions, und
daß die Konzentration des polyvalenten Metallkomplexes, ausgedrückt als Gewicht des Metalloxids, zwischen 2 und 10 000 ppm, vorzugsweise zwischen 2 und 100 ppm, liegt.

2. Zusammensetzungen nach Anspruch 1, in denen die genannte Monocarbonsäure die Milchsäure ist.

3. Zusammensetzungen nach den Ansprüchen 1 und 2, in denen der wasserlösliche Komplex das Triethanolamin oder das Diisopropylamin umfaßt.

4. Zusammensetzungen nach einem der Ansprüche 1 bis 3, in denen der wasserlösliche Komplex aus Natriumlactat und Zirkonium oder aus Natriumlactat oder Ammoniumlactat und Titan besteht.

5. Zusammensetzungen nach einem der Ansprüche 1 bis 4, in denen die Konzentration an Copolymer zwischen 5 und 50 000 Gewichts-ppm, vorzugsweise zwischen 1000 und 10 000 ppm, liegt.

6. Zusammensetzungen nach einem der Ansprüche 1 bis 5, in denen das Molverhältnis zwischen dem komplexbildenden Agens und dem Metallkation zwischen 0,5 und 4 liegt.

7. Verfahren zur verbesserten Gewinnung von Kohlenwasserstoffen durch Herabsetzung der Wasserdurchlässigkeit mindestens eines Teils einer unterirdischen Formation zur Förderung der genannten Kohlenwasserstoffe, bei dem man durch mindestens eine Injektions-Bohrung oder mindestens eine Förder-Bohrung eine wäßrige Lösung mindestens eines Copolymers, das Sulfonsäurefunktionen aufweist, oder seiner Salze, das die folgende Struktur hat: 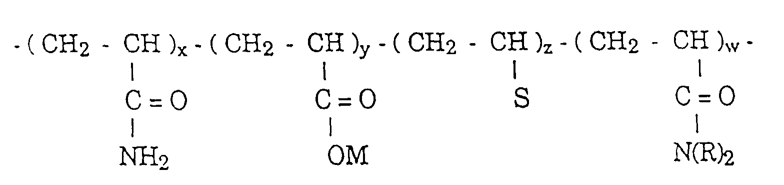 worin:
S ausgewählt wird aus den folgenden funktionellen Gruppen: SO₃M, CH₂SO₃M, CONH-C(CH₃)₂CH₂SO₃M oder Phenyl-SO₃M;
R ausgewählt wird aus den Gruppen H, Alkyl, Cycloalkyl oder auch Aralkyl, ausgenommen der Fall, daß die beiden Reste R für H stehen;
M ein Ammoniumion oder ein lon der Gruppen I_{A}, I_{B} oder der Gruppen II_{A} und II_{B};
x variiert von 5 bis 95 %;
y variiert von 0 bis 30 %;
z variiert von 5 bis 95 %; und
w variiert von 0 bis 30 %;
und mindestens einen wasserlöslichen Komplex eines Metallkations, ausgewählt aus der Gruppe Titan, Zirkonium und Hafnium, als Vernetzungsmittel unter geeigneten Bedingungen injiziert,
die Injektion in die Formation für eine ausreichende Zeitspanne stoppt, um die in situ-Bildung eines geeigneten Gels durch Vernetzung zu ermöglichen, und
Wasser in die Injektions-Bohrung injiziert, wenn es sich um eine Injektions-Bohrung handelt, oder die Förderung aus der Bohrung wieder aufnimmt, wenn es sich um eine Förder-Bohrung handelt,
dadurch gekennzeichnet, daß
man das genannte Copolymer und mindestens den genannten wasserlöslichen Komplex, der aus der Reaktion des Kations mit mindestens einem komplexbildenden Agens, ausgewählt aus der Gruppe der α-Hydroxy-monocarbonsäuren, der aliphatischen Amine, der gegebenenfalls alkylierten Aminoalkohole und des alkylierten Ammoniumions resultiert, in die genannte Bohrung injiziert, und daß der genannte Komplex, der das genannte Copolymer vernetzen kann, in einer Konzentration, ausgedrückt als Gewicht des Metalloxids, von 2 bis 10 000 Teilen pro Million Teilen Lösung vorliegt.

8. Verfahren nach Anspruch 7, bei dem das komplexbildende Agens die Milchsäure, das Triethanolamin, das Diisopropylamin ist.

9. Verfahren nach einem der Ansprüche 7 bis 8,
bei dem der pH-Wert der Lösung im Augenblick der Vernetzung zwischen 6 und 10 liegt und
bei dem der pH-Wert, das Verhältnis zwischen Copolymer und wasserlöslichem Komplex und das Verhältnis zwischen komplexbildendem Agens und
Metallkation so ausgewählt werden, daß die für die Gelbildung erforderliche Zeit mindestens 6 h und vorzugsweise 12 bis 48 h, beträgt.

10. Verfahren nach einem der Ansprüche 7 bis 9, bei dem die Konzentration des Komplexes 2 bis 100 ppm, vorteilhaft 3 bis 95 ppm und vorzugsweise 5 bis 25 ppm beträgt, so daß die Wasserdurchlässigkeit stark vermindert wird, ohne daß die Öldurchlässigkeit wesentlich beeinflußt wird.

11. Verfahren nach einem der Ansprüche 7 bis 9, bei dem die Konzentration des Komplexes 100 bis 10000 ppm, vorteilhaft 110 bis 8000 ppm beträgt, wenn die Formation zerklüftet oder sehr durchlässig ist.

12. Verfahren nach einem der Ansprüche 7 bis 11, dadurch gekennzeichnet, daß es auf den Fall angewendet wird, bei dem die Formation eine Temperatur von 70 bis 170°C hat.

13. Verfahren nach einem der Ansprüchen 7 bis 12, bei dem man als Verzögerungsmittel mindestens ein organisches α-Hydroxy-mono- oder -polysäure-Additiv wie Milchsäure, Citronensäure oder Weinsäure einführt.

## Claims

1. Aqueous gel compositions consisting essentially of : water ;
at least one copolymer having the following structure : 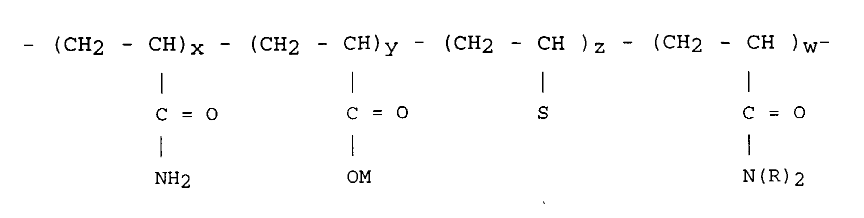 wherein :
S is selected from the following functional groups : SO₃M, CH₂SO₃M, CONH-C (CH₃)₂CH₂ SO₃M or phenyl SO₃M;
R is selected from H, alkyl, cycloalkyl or aralkyls groups, except the two R being equal to H ;
M is an ammonium ion or an ion of the IA, IB groups or of the IIA and IIB groups ;
x varies from 5 to 95 % ;
y varies from 0 to 30 %
z varies from 5 to 95 %
w varies from 0 to 30 % ; and
at least one water-soluble complex of a metal cation selected from the group consisting of titanium, zirconium and hafnium as a crosslinking agent, mixed in a sufficient amount to form the gel, said compositions being characterized in that said complex results from the reaction of the cation and at least one complexing agent selected from the group consisting of the α-hydroxylated monocarboxylic acids, the aliphatic amines, the optionally alkylated aminoalcohols and an alkylated ammonium ion and the polyvalent metal complex concentration expressed by weight of metal oxide is between 2 and 10,000 ppm, preferably 2 to 100 ppm.

2. Compositions according to claim 1, wherein the monocarboxylic acid is lactic acid.

3. Compositions according to claims 1 and 2, wherein the water-soluble complex comprises triethanolamine or diisopropylamine.

4. Compositions according to anyone claims 1 to 3, wherein the water-soluble complex is sodium and zirconium lactate or sodium lactate or ammonium and titanium lactate.

5. Compositions according to anyone claims 1 to 4, wherein the copolymer concentration is between 5 and 50,000 ppm by weight, preferably between 1000 and 10,000 ppm.

6. Compositions according to anyone claims 1 to 5, wherein the molar ratio of complexing agent to metal cation is between 0.5 and 4.

7. Process of improved recovery of hydrocarbons by reduction of the water permeability in at least one part of a subterranean formation producing said hydrocarbons, according to which by at least one injecting well or at least one producing well, an aqueous solution of at least one polymer comprising sulfonic acid function or their salts having the following structure : 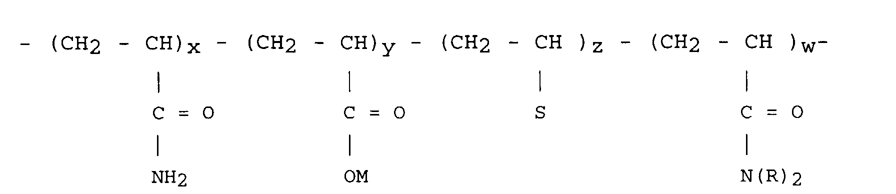 wherein :
S is selected from the following functional groups : SO₃M, CH₂SO₃M, CONH-C (CH₃)₂CH₂ SO₃M or phenyl SO₃M;
R is selected from H, alkyl, cycloalkyl or aralkyls groups, except the two R being equal to H;
M is an ammonium ion or an ion of the IA, IB groups or of the IIA and IIB groups ;
x varies from 5 to 95 % ;
y varies from 0 to 30 %
z varies from 5 to 95 %
w varies from 0 to 30 % ;
and at least one water soluble complex of metal cation selected from Ti, Zr, Hf as a crosslinking agent, are injected under suitable conditions, the injection is stopped in the formation for a sufficient time making possible in situ the formation by crosslinking of a suitable gel, and water is injected in the injecting well if an injecting well is involved or the well is put back into production if a producing well is involved, the process being characterized in that said polymer and said water soluble complex resulting from the reaction of the cation and at least one complexing agent selected from the group consisting of the α-hydroxylated monocarboxylic acids, the aliphatic amines, the optionally alkylated aminoalcohols, and the alkylated ammonium ion are injected in said well and in that said complex able to crosslink said copolymer has a concentration expressed by weight of metal oxide of 2 to 10,000 parts per million of parts of the solution.

8. Process according to claim 7, wherein the complexing agent is the lactic acid, the triethanolamine and the diisopropylamine.

9. Process according to anyone of claims 7 to 8, wherein the pH of the solution at the time of the crosslinking is between 6 and 10 nd wherein the pH, the ratio of copolymer to water-soluble complex and the ratio of complexing agent to metal cation are selected so that the time necessary for the formation of the gel is at least 6 hours and preferably 12 to 48 hours.

10. Process according to anyone of claims 7 to 9 wherein the concentration of the complex is 2 to 100 ppm, advantageously 3 to 95 ppm and preferably 5 to 25 ppm so that the water permeability is greatly reduced without the oil permeability being appreciably affected.

11. Process according to anyone of claims 7 to 9, wherein the concentration of the complex is 100 to 10,000 ppm, advantageously 110 to 8000 ppm, when the formation is fissured or very permeable.

12. Process according to anyone of claims 7 to 11, wherein it is applied in the case where the formation has a temperature of 70-170°C.

13. Process according to anyone of claims 7 to 12, wherein at least one α-hydroxylated organic monoacid or polyacid additive such as lactic acid, citric acid or tartaric acid is introduced as retarding agent.
